# EUROPEAN PATENT SPECIFICATION

(11) **EP 1 650 069 B1**
(45) Date of publication and mention of the grant of the patent: **30.07.2008**
(21) Application number: 04105283.8
(22) Date of filing: 25.10.2004
(51) Int. Cl.: B60J 7/047, B60J 7/057

(54) **Open roof construction**
Dachöffnungs-Konstruktion
Construction d'un toit ouvrant

(43) Date of publication of application: 26.04.2006
(73) Proprietor: Inalfa Roof Systems Group B.V., 5804 AH Venray (NL)
(72) Inventor: Jansen, Carlo, 5821 AW Vierlingsbeek (NL)
(74) Representative: Voncken, Bartholomeus Maria Ch.

(56) References cited:
- EP-A- 1 247 674
- EP-A- 1 279 537
- CH-A- 389 424
- DE-C1- 4 041 908

## Description

The invention relates to an open roof construction for a vehicle, comprising a roof opening formed in the roof of the vehicle and a first closure element, which is movable along a guide between a position in which it closes the roof opening and a position in which it releases the roof opening, wherein a driving mechanism is used for the first closure element, which driving mechanism comprises a driving source and at least one driving cable which couples said driving source to said closure element, further comprising a locking mechanism cooperating with the driving cable with which the first closure element can be locked in at least one position with respect to said guide, whilst the driving cable is disconnected from said closure element in said position and can be moved with respect thereto for the purpose of driving a second closure element that forms part of the open roof construction, and wherein the driving cable has a section which follows a looped path through said first closure element.

An example of a prior art open roof construction of this type is disclosed by EP-A-1.247.674 in the name of applicant. In this known open roof construction said looped driving cable section is positioned entirely at one longitudinal side of the first closure element (longitudinal means extending in parallel to the longitudinal direction of the vehicle, provided that the movement of the closure elements also occurs in such a longitudinal direction). Often, the closure element is part of a sunshade means, which implies that a portion at large as possible should be translucent. This, again, means that the dimensions of the looped path of the driving cable section should be reduced as much as possible. Thus, in the known open roof construction said driving cable section follows a looped path with a very tight loop. Such a tight loop imposes special demands on the driving cable itself (for example the driving cable should be very flexible, whereas moreover a reduced friction is required). Further, in the known open roof construction the looped driving cable sections are housed in specially designed cassette mechanisms attached to the respective longitudinal sides of the closure element, rendering the open roof construction rather complex and expensive.

It is an object of the present invention to provide an improved open roof construction of the type referred to above.

Thus, in accordance with the present invention, there is provided an open roof construction for a vehicle, comprising a roof opening formed in the roof of the vehicle and a first closure element, which is movable along a guide between a position in which it closes the roof opening and a position in which it releases the roof opening, wherein a driving mechanism is used for the first closure element, which driving mechanism comprises a driving source and at least one driving cable which couples said driving source to said closure element, further comprising a locking mechanism cooperating with the driving cable with which the first closure element can be locked in at least one position with respect to said guide, whilst the driving cable is disconnected from said closure element in said position and can be moved with respect thereto for the purpose of driving a second closure element that forms part of the open roof construction, and wherein the driving cable has a section which follows a looped path through said first closure element, characterized in that said driving cable section extends substantially along the outer circumference of the first closure element, running in a first direction away from the second closure element along a first longitudinal side thereof, traversing along a transversal side thereof towards the opposite longitudinal side and finally running in a direction opposite to the first direction towards the second closure element along the opposite longitudinal side.

Although, according to the present invention, said driving cable section again follows a looped path through said first closure element, now said looped path is much wider, because it follows said first longitudinal side, next a transversal side and finally an opposite longitudinal side of the closure element. As a result, the driving cable is allowed to be less flexible than in the prior art open roof construction, allowing the use of less sophisticated driving cables. Further, because the driving cable substantially is positioned along the outer circumference of the closure element, substantially the entire surface of the closure element remains free of the driving cable, which especially in the case that the closure element is part of a sun shade means has distinct advantages. Further, positioning the driving cable along the outer circumference of the first closure element makes the construction of the open roof construction less complicated and thus cheaper. Finally, the parts of the first closure element where the drive cable extends, especially at the said transversal side, may act as reinforcements of the closure element, adding to the bending resistance thereof.

In a preferred embodiment of the open roof construction according to the present invention the first closure element is provided with edge reinforcement members, wherein the said driving cable section at least partially extends through channels defined within said edge reinforcement members. It is noted, that said edge reinforcement members not necessarily need to be the outermost parts of the closure element as long as they are positioned in the vicinity of the circumference thereof.

As a non-limiting example, said edge reinforcement members may comprise hollow profiled members, internally housing the driving cable section. It is noted, however, that it is not necessary that such edge reinforcement members fully enclose the said driving cable section; also edge reinforcement members could be provided which comprise a channel opening to one side.

According to a preferred embodiment of the open roof construction according to the present invention two driving cables are provided having respective sections positioned substantially mirror-wise on said first closure element. As a result, forces acting on the closure element or closure elements during opening and closing the open roof construction will be symmetrical.

Finally it is noted, that it is possible to use a standard retraction cable as driving cable, thus reducing the complexity and cost of the open roof construction according to the present invention.

Hereinafter the invention will be elucidated while referring to the drawing, in which embodiments of the open roof construction according the present invention are illustrated.

Herein:
figure 1 shows, in a top plan view and schematically, an embodiment of an open roof construction according to the present invention, and
figure 2 illustrates two different cross sections according to II-II in figure 1.

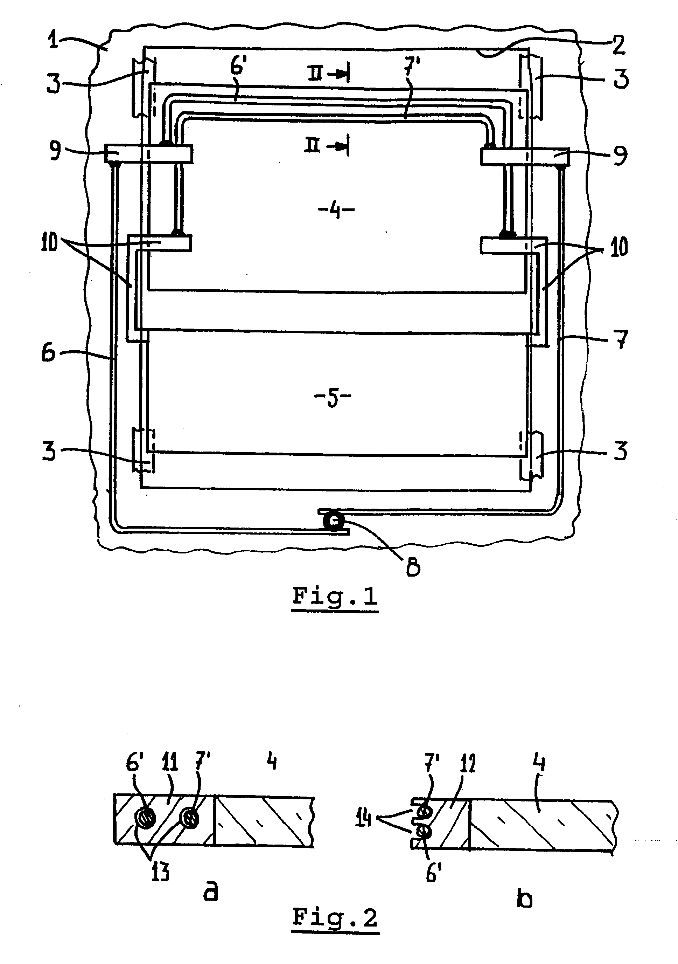

Firstly referring to figure 1, part of a roof 1 of a vehicle is presented in which a roof opening 2 is formed. Along guides 3 (only represented partly) a first closure element 4 and a second closure element 5 are movable in a longitudinal direction of the vehicle (i.e. in parallel to the guides 3).

For driving the first and second closure elements 4 and 5 a driving mechanism is used, which basically comprises two driving cables 6 and 7 which with one end are in a driving relation with, for example, an electric motor 8. By means of locking mechanisms 9 the driving cables 6 and 7 are in a releasable manner connected to the first closure element 4. Connected to each locking mechanism 9 are first ends of driving cable sections 6' and 7', respectively, which each with an opposite second end are connected to coupling means 10 attached to the second closure element 5.

The basic operation of the illustrated open roof construction is, that in a first instance the locking mechanisms 9 are locked to the closure elements 4, such that moving the driving cables 6 and 7 also moves the combination of closure element 4 and closure element 5. At some instant, however, the locking mechanisms 9 are detached from the closure element 4 whereas said closure element 4 is locked to the guides 3. Now a further movement of the driving cables 6 and 7 will, through the driving cable sections 6', 7' and the coupling means 10, lead to a movement of the second closure element 5 relative to the first closure element 4.

For a detailed description of the operation of an open roof construction of this type reference is made to EP-A-1.247.674.

In the present open roof construction the driving cable sections 6' and 7' extend substantially along the outer circumference of the first closure element 4, that is running in a first direction away from the second closure element 5 along a first longitudinal side of the closure element 4, traversing a transversal side thereof (in figure 1 at the top) towards the opposite longitudinal side and finally running in a direction opposite to the first direction towards the second closure element 5 along the opposite longitudinal side.

Although not represented in detail in figure 1, the cross-sections according to figure 2 show embodiments in which the closure element 4 is surrounded by edge reinforcement members 11 or 12, respectively, in which channels 13 or gutters 14 are defined housing the driving cable sections 6' and 7'.

It is noted, that the embodiments illustrated in figure 2a and figure 2b merely show two possible embodiments of the edge reinforcement members with channels or gutters. It is also possible, for example, that such channels or gutters are directly formed into the closure elements 4. Further, in the embodiment illustrated in figure 2b cover elements could be provided on top of the gutters 14 hiding the driving cable sections 6' and 7' from external influences.

As figure 1 demonstrates clearly, the respective sections 6' and 7' of the driving cables 6 and 7, respectively, are positioned substantially mirror-wise on said first closure element.

Because of the provision of two driving cables 6 and 7 symmetrical forces will be acting on the closure elements 4 and 5. The driving cables 6 and 7 may comprise standard retraction cables.

The invention is not limited to the embodiments described before, which may be varied widely within the scope of the invention as defined by the appending claims.

## Claims

1. Open roof construction for a vehicle, comprising a roof opening (2) formed in the roof (1) of the vehicle and a first closure element (4), which is movable along a guide (3) between a position in which it closes the roof opening and a position in which it releases the roof opening, wherein a driving mechanism is used for the first closure element, which driving mechanism comprises a driving source (8) and at least one driving cable (6; 7) which couples said driving source to said closure element, further comprising a locking mechanism (9) cooperating with the driving cable with which the first closure element (4) can be locked in at least one position with respect to said guide (3), whilst the driving cable (6; 7) is disconnected from said closure element (4) in said position and can be moved with respect thereto for the purpose of driving a second closure element (5) that forms part of the open roof, construction, and wherein the driving cable has a section (6'; 7') which follows a looped path through said first closure element, **characterized in that** said driving cable section (6'; 7') extends substantially along the outer circumference of the first closure element (4), running in a first direction away from the second closure element (5) along a first longitudinal side of the first closure element (4), traversing along a transversal side thereof towards the opposite longitudinal side and finally running in a direction opposite to the first direction towards the second closure element (5) along the opposite longitudinal side.

2. Open roof construction according to claim 1, wherein the first closure element (4) is provided with edge reinforcement members (11, 12) and wherein the said driving cable section (6'; 7') at least partially extends through channels (13, 14) defined within said edge reinforcement members.

3. Open roof construction according to claim 1 or 2, wherein two driving cables (6, 7) are provided having respective sections (6', 7') positioned substantially mirror-wise on said first closure element (4).

4. Open roof construction according to any of the previous claims, wherein the driving cable (6; 7) comprises a standard retraction cable.

## Patentansprüche

1. Offendachkonstruktion für ein Fahrzeug, aufweisend eine Dachöffnung (2), die in dem Dach (1) des Fahrzeuges ausgebildet ist, und ein erstes Verschlusselement (4), das entlang einer Führung (3) zwischen einer Position, in der es die Dachöffnung schließt, und einer Position bewegbar ist, in der es die Dachöffnung freigibt, wobei für das erste Verschlusselement ein Antriebsmechanismus verwendet wird, der eine Antriebsquelle (8) und mindestens ein Antriebskabel (6; 7) aufweist, das die Antriebsquelle an das Verschlusselement kuppelt, ferner aufweisend einen Verrieglungsmechanismus (9), der mit dem Antriebskabel zusammenwirkt, mit dem das erste Verschlusselement (4) in mindestens einer Position bezüglich der Führung (3) verriegelt werden kann, wobei das Antriebskabel (6; 7) von dem Verschlusselement in der besagten Position losgekuppelt ist und bezüglich dazu für den Zweck bewegt werden kann, ein einen Teil der Offendachkonstruktion bildendes zweites Verschlusselement (5) anzutreiben, und wobei das Antriebskabel einen Abschnitt (6'; 7') aufweist, der einer geschlungenen Bahn durch das erste Verschlusselement hindurch folgt, **dadurch gekennzeichnet, dass** der Antriebskabelabschnitt (6'; 7'') sich im Wesentlichen entlang dem Außenumfang des ersten Verschlusselements (4) erstreckt, in einer ersten Richtung weg von dem zweiten Verschlusselement (5) entlang einer ersten Längsseite des ersten Verschlusselements (4) verläuft, entlang einer Querseite davon hin zu der gegenüberliegenden Längsseite querverläuft und schließlich in zu der ersten Richtung entgegengesetzten Richtung hin zu dem zweiten Verschlusselement (5) entlang der gegenüberliegenden Längsseite verläuft.

2. Offendachkonstruktion gemäß Anspruch 1, wobei das erste Verschlusselement (4) mit Randverstärkungselementen (11, 12) versehen ist und wobei der Antriebskabelabschnitt (6; 7) sich wenigstens teilweise durch Kanäle (13, 14) erstreckt, die innerhalb der Randverstärkungselemente definiert sind.

3. Offendachkonstruktion gemäß Anspruch 1 oder 2, wobei zwei Antriebskabel (6, 7) vorgesehen sind, die jeweilige Abschnitte (6', 7') aufweisen, die auf im Wesentlichen spiegelbildartige Weise an dem ersten Verschlusselement (4) positioniert sind.

4. Offendachkonstruktion gemäß einem der vorherigen Ansprüche, wobei das Antriebskabel (6; 7) ein Standard-Einzugkabel ist.

## Revendications

1. Construction de toit ouvrant pour un véhicule, comprenant une ouverture de toit (2) formée dans le toit (1) du véhicule et un premier élément de fermeture (4) qui est déplaçable le long d'un guidage (3) entre une position dans laquelle il ferme l'ouverture de toit et une position dans laquelle il libère l'ouverture de toit, dans laquelle un mécanisme d'entraînement est utilisé pour le premier élément de fermeture, lequel mécanisme d'entraînement comprend une source d'entraînement (8) et au moins un câble d'entraînement (6 ; 7) qui relie ladite source d'entraînement audit élément de fermeture, comprenant de plus un mécanisme de verrouillage (9) coopérant avec le câble d'entraînement, avec lequel le premier élément de fermeture (4) peut être bloqué dans au moins une position par rapport audit guidage (3), tandis que le câble d'entraînement (6 ; 7) est déconnecté dudit élément de fermeture (4) dans ladite position et peut être déplacé par rapport à celle-ci, afin d'entraîner un second élément de fermeture (5) qui fait partie de la construction de toit ouvrant, et dans lequel le câble d'entraînement présente une section (6' ; 7') qui suit un trajet en boucle à travers ledit premier élément de fermeture,
**caractérisée en ce que** ladite section de câble d'entraînement (6' ; 7') s'étend sensiblement le long de la circonférence extérieure du premier élément de fermeture (4), se déplaçant dans une première direction en éloignement du second élément de fermeture (5) le long d'un premier côté longitudinal du premier élément de fermeture (4) translatant le long de son côté transversal vers le côté longitudinal opposé et, enfin, se déplaçant dans une direction opposée à la première direction vers le second élément de fermeture (5) le long du côté longitudinal opposé.

2. Structure de toit ouvrant selon la revendication 1, dans laquelle le premier élément de fermeture (4) est muni d'éléments de renfort de bord (11, 12) et dans lequel ladite section de câble d'entraînement (6' ; 7') s'étend au moins partiellement à travers des profilés en U (13, 14) définis à l'intérieur desdits éléments de renforcement de bord.

3. Structure de toit ouvrant selon la revendication 1 ou 2, dans laquelle deux câbles d'entraînement (6 ; 7) sont prévus avec des sections respectives (6' ; 7') positionnées sensiblement de façon spéculaire sur ledit premier élément de fermeture (4).

4. Structure de toit ouvrant selon l'une quelconque des revendications précédentes, dans laquelle le câble d'entraînement (6 ; 7) comprend un câble de retrait standard.
